# EUROPEAN PATENT APPLICATION

(11) **EP 4 576 333 A1**
(43) Date of publication of application: **25.06.2025**
(21) Application number: 23853938.1
(22) Date of filing: 25.04.2023
(51) Int. Cl.: H01M 10/615

(54) **METHOD AND APPARATUS FOR INHIBITING VEHICLE VIBRATION DURING SELF-HEATING PROCESS OF BATTERY, AND AUTOMOBILE**

(30) Priority: 18.08.2022 CN 202210992723
(71) Applicant: BYD Company Limited, Shenzhen, Guangdong 518118 (CN)
(72) Inventor: LING, Heping, Shenzhen, Guangdong 518118 (CN); YAN, Lei, Shenzhen, Guangdong 518118 (CN); ZHAI, Zhen, Shenzhen, Guangdong 518118 (CN); GAO, Wen, Shenzhen, Guangdong 518118 (CN); ZHU, Ke, Shenzhen, Guangdong 518118 (CN)
(74) Representative: Mathys & Squire
(86) International application number: PCT/CN2023/090520
(87) International publication number: WO 2024/037030

(57) **Abstract**

A method and apparatus for inhibiting vehicle vibration during a self-heating process of a battery, and an automobile. The method comprises: controlling a power battery pack (E) to output a driving current to a first motor (M1) so as to drive the first motor to rotate, and when the first motor rotates, dragging a second motor (M2) to rotate; controlling the power battery pack to output a self-heating current to the second motor so as to perform self-heating of a power battery; acquiring a real-time rotation speed of the first motor; and controlling a fundamental wave frequency of the self-heating current according to the real-time rotation speed, so that the fundamental wave frequency and the real-time rotation speed form staggered peaks.

## Description

### CROSS-REFERENCE TO RELATED APPLICATIONS

The present disclosure claims priority to Chinese Patent Application No. 202210992723.9 filed on August 18, 2022, which is incorporated herein by reference in its entirety.

### FIELD

The present disclosure relates to the field of battery technologies, and in particular, to a method and an apparatus for inhibiting vehicle vibration during self-heating of a battery, and a vehicle.

### BACKGROUND

Currently, with widespread use of new energy sources, batteries may be used as power sources in the vehicle field. Battery performance is affected by different environments in which the batteries are used as the power sources. In low-temperature environments, when an electric vehicle is driven, a battery pack is affected by the low-temperature environments, the activity of an active substance in the battery pack noticeably decreases, and an internal resistance of the battery pack also increases as temperature decreases. Therefore, in low-temperature environments, the endurance mileage of the electric vehicle significantly decreases. To ensure that the activity in the battery pack is not affected by low-temperature environments, the battery pack needs to be heated, to increase a body temperature of the battery pack.

Currently, battery packs are heated externally in most cases, such as but not limited to wind heating or water heating. Such heating methods result in high manufacturing costs of heating apparatuses of the battery packs, and the heating efficiency is poor, leading the battery packs to consume a relatively large amount of electricity during heating operations.

Alternatively, in the related art, there is further a solution that alternate pulse charging and discharging are performed between a motor and a battery, to self-heat the battery by using an internal resistor of the battery. Compared with the external heating, the heating efficiency of the solution is higher.

Alternatively, for an electric vehicle equipped with multiple motors, some motors may be used for driving, and the other motors may be used for self-heating a battery. In this case, the battery may be self-heated during traveling. However, the inventors have found that such a self-heating manner causes the motor used for self-heating to jitter, thereby causing the entire vehicle to vibrate with a strong vibration sense. This not only brings bad driving experience to passengers, but also shortens a life span of the motor. Currently, a direct cause of jitters of the motor has not been found, let alone how to resolve the problem.

### SUMMARY

In view of the foregoing problems, the present disclosure is proposed, to provide a method and an apparatus for inhibiting vehicle vibration during self-heating of a battery, and a vehicle, to overcome the foregoing problems or to resolve at least some of the foregoing problems.

According to a first aspect, an embodiment of the present disclosure provides a method for inhibiting vehicle vibration during self-heating of a battery. The method is applied to a vehicle including a power battery pack, a first motor, and a second motor, and the method includes:
controlling the power battery pack to output a drive current to the first motor to drive the first motor to rotate, the first motor dragging, when rotating, the second motor to rotate;
controlling the power battery pack to output a self-heating current to the second motor to self-heat a power battery;
obtaining a real-time rotation speed of the first motor; and
controlling a fundamental frequency of the self-heating current based on the real-time rotation speed, to stagger the fundamental frequency and the real-time rotation speed.

In some embodiments, controlling the fundamental frequency of the self-heating based on the real-time rotation speed, to stagger the fundamental frequency and the real-time rotation speed includes:
when the real-time rotation speed falls within a first rotation speed range, controlling the fundamental frequency to be a first frequency; and
when the real-time rotation speed falls within a second rotation speed range, controlling the fundamental frequency to be a second frequency, where any rotation speed in the second rotation speed range is greater than any rotation speed in the first rotation speed range, and the second frequency is less than the first frequency.

In some embodiments, controlling the fundamental frequency of the self-heating based on the real-time rotation speed, to stagger the fundamental frequency and the real-time rotation speed includes:
controlling the fundamental frequency based on the real-time rotation speed and a real-time condition, to stagger the fundamental frequency and the real-time rotation speed, where the real-time condition includes: an acceleration condition or a deceleration condition.

In some embodiments, controlling the fundamental frequency based on the real-time rotation speed and the real-time condition, to stagger the fundamental frequency and the real-time rotation speed includes:
determining an expected rotation speed based on a pedaling degree of an acceleration pedal under the acceleration condition or a pedaling degree of a deceleration pedal under the deceleration condition, where the expected rotation speed indicates a rotation speed of a motor corresponding to a vehicle speed that a driver expects to achieve; and
controlling a self-heating current value and the fundamental frequency based on a value relationship between the expected rotation speed and multiple preset rotation speeds, and a value relationship between the real-time rotation speed and the multiple preset rotation speeds, in combination with the real-time condition.

In some embodiments, the multiple preset rotation speeds include: a first preset rotation speed and a second preset rotation speed; and
controlling the self-heating current value and the fundamental frequency based on the value relationship between the expected rotation speed and multiple preset rotation speeds, and the value relationship between the real-time rotation speed and the multiple preset rotation speeds, in combination with the real-time condition includes:
if the expected rotation speed is not greater than the second preset rotation speed, in a process in which the real-time rotation speed increases to the expected rotation speed under the acceleration condition, controlling the self-heating current value to be a first current value, and controlling the fundamental frequency to be the first frequency; or
if the expected rotation speed is greater than the second preset rotation speed, in a process in which the real-time rotation speed increases to a rotation speed less than the first preset rotation speed under the acceleration condition, controlling the self-heating current value to be a first current value, and controlling the fundamental frequency to be the first frequency; and
in a process in which the real-time rotation speed increases from the first preset rotation speed to the expected rotation speed, controlling the self-heating current value to decrease from the first current value to a second current value, and controlling the fundamental frequency to decrease from the first frequency to the second frequency, where the second current value is close to 0 or equal to 0.

In some embodiments, after controlling the self-heating current value to decrease from the first current value to the second current value, and controlling the fundamental frequency to decrease from the first frequency to the second frequency, the method further includes:
determining whether a stable signal is received, the stable signal indicating that the second motor does not generate a torque pulse ripple that oscillates back and forth; and
when the stable signal is received, controlling the self-heating current value to increase from the second current value to the first current value, and maintaining the fundamental frequency to be the second frequency; or
when the stable signal is not received, maintaining the self-heating current value to be the second current value, maintaining the fundamental frequency to be the second frequency, and after the stable signal is received, controlling the self-heating current value to increase from the second current value to the first current value, and maintaining the fundamental frequency to be the second frequency.

In some embodiments, the multiple preset rotation speeds include: the first preset rotation speed and the second preset rotation speed; and
controlling the self-heating current value and the fundamental frequency based on the value relationship between the expected rotation speed and multiple preset rotation speeds, and the value relationship between the real-time rotation speed and the multiple preset rotation speeds, in combination with the real-time condition includes:
if the expected rotation speed is greater than the second preset rotation speed, in a process in which the real-time rotation speed decreases to the expected rotation speed under the deceleration condition, controlling the self-heating current value to be the first current value, and controlling the fundamental frequency to be the second frequency; or
if the expected rotation speed is not greater than the second preset rotation speed, after the real-time rotation speed is less than the second preset rotation speed under the deceleration condition, controlling the self-heating current value to decrease from the first current value to the second current value, and controlling the fundamental frequency to increase from the second frequency to the first frequency, where the second current value is close to 0 or equal to 0.

In some embodiments, after controlling the self-heating current value to decrease from the first current value to the second current value, and controlling the fundamental frequency to increase from the second frequency to the first frequency, the method further includes:
determining whether the stable signal is received, the stable signal indicating that the second motor does not generate the torque pulse ripple that oscillates back and forth; and
when the stable signal is received, controlling the self-heating current value to increase from the second current value to the first current value, and maintaining the fundamental frequency to be the first frequency; or
when the stable signal is not received, maintaining the self-heating current value to be the second current value, maintaining the fundamental frequency to be the first frequency, and after the stable signal is received, controlling the self-heating current value to increase from the second current value to the first current value, and maintaining the fundamental frequency to be the first frequency.

In some embodiments, a value of the first preset rotation speed and a value of the second preset rotation speed are determined by the first frequency, the second frequency, and a quantity of pole pairs of a motor.

In some embodiments, the first motor is a synchronous motor or an asynchronous motor, and the second motor is an asynchronous motor.

According to a second aspect, an embodiment of the present disclosure further provides another method for inhibiting vehicle vibration during self-heating of a battery. The method is applied to a vehicle including a power battery pack, a first motor, and a second motor, and the method includes:
controlling the power battery pack to output a drive current to the first motor to drive the first motor to rotate, the first motor dragging, when rotating, the second motor to rotate;
controlling the power battery pack to output a self-heating current to the second motor to self-heat a power battery;
obtaining a fundamental frequency of the drive current of the first motor; and
controlling a fundamental frequency of the self-heating current based on the fundamental frequency of the drive current, to stagger the fundamental frequency of the self-heating current and the fundamental frequency of the drive current.

In some embodiments, controlling a fundamental frequency of the self-heating current based on the fundamental frequency of the drive current, to stagger the fundamental frequency of the self-heating current and the fundamental frequency of the drive current includes:
when the fundamental frequency of the drive current falls within a first frequency range, controlling the fundamental frequency of the self-heating current to be a first frequency; and
when the fundamental frequency of the drive current falls within a second frequency range, controlling the fundamental frequency of the self-heating current to be a second frequency, where any frequency in the second frequency range is greater than any frequency in the first frequency range, and the second frequency is less than the first frequency.

In some embodiments, controlling the fundamental frequency of the self-heating current based on the fundamental frequency of the drive current, to stagger the fundamental frequency of the self-heating current and the fundamental frequency of the drive current includes:
controlling the fundamental frequency of the self-heating current based on the fundamental frequency of the drive current and a real-time condition, to stagger the fundamental frequency of the self-heating current and the fundamental frequency of the drive current, where the real-time condition includes: an acceleration condition or a deceleration condition.

In some embodiments, controlling the fundamental frequency of the self-heating current based on the fundamental frequency of the drive current and the real-time condition, to stagger the fundamental frequency of the self-heating current and the fundamental frequency of the drive current includes:
determining an expected rotation speed based on a pedaling degree of an acceleration pedal under the acceleration condition or a pedaling degree of a deceleration pedal under the deceleration condition, where the expected rotation speed indicates a rotation speed of a motor corresponding to a vehicle speed that a driver expects to achieve;
determining, based on the expected rotation speed, an expected frequency corresponding to the expected rotation speed; and
controlling a self-heating current value and the fundamental frequency of the self-heating current based on a value relationship between the expected frequency and a plurality of preset frequencies, and a value relationship between the fundamental frequency of the drive current and the plurality of preset frequencies, in combination with the real-time condition.

In some embodiments, the plurality of preset frequencies include: a first preset frequency and a second preset frequency; and
controlling the self-heating current value and the fundamental frequency of the self-heating current based on the value relationship between the expected frequency and the plurality of preset frequencies, and the value relationship between the fundamental frequency of the drive current and the plurality of preset frequencies, in combination with the real-time condition includes:
if the expected frequency is not greater than the second preset frequency, in a process in which the fundamental frequency of the drive current increases to the expected frequency under the acceleration condition, controlling the self-heating current value to be a first current value, and controlling the fundamental frequency of the self-heating current to be the first frequency; or
if the expected frequency is greater than the second preset frequency, in a process in which the fundamental frequency of the drive current increases to a frequency less than the first preset frequency under the acceleration condition, controlling the self-heating current value to be a first current value, and controlling the fundamental frequency of the self-heating current to be the first frequency; and
in a process in which the fundamental frequency of the drive current increases from the first preset frequency to the expected frequency, controlling the self-heating current value to decrease from the first current value to a second current value, and controlling the fundamental frequency of the self-heating current to decrease from the first frequency to the second frequency, where the second current value is close to 0 or equal to 0.

In some embodiments, after controlling the self-heating current value to decrease from the first current value to the second current value, and controlling the fundamental frequency of the self-heating current to decrease from the first frequency to the second frequency, the method further includes:
determining whether a stable signal is received, the stable signal indicating that the second motor does not generate a torque pulse ripple that oscillates back and forth; and
when the stable signal is received, controlling the self-heating current value to increase from the second current value to the first current value, and maintaining the fundamental frequency of the self-heating current to be the second frequency; or
when the stable signal is not received, maintaining the self-heating current value to be the second current value, maintaining the fundamental frequency of the self-heating current to be the second frequency, and after the stable signal is received, controlling the self-heating current value to increase from the second current value to the first current value, and maintaining the fundamental frequency of the self-heating current to be the second frequency.

In some embodiments, the plurality of preset frequencies include: a first preset frequency and a second preset frequency; and
controlling the self-heating current value and the fundamental frequency of the self-heating current based on the value relationship between the expected frequency and the plurality of preset frequencies, and the value relationship between the fundamental frequency of the drive current and the plurality of preset frequencies, in combination with the real-time condition includes:
if the expected frequency is greater than the second preset frequency, in a process in which the fundamental frequency of the drive current decreases to the expected frequency under the deceleration condition, controlling the self-heating current value to be the first current value, and controlling the fundamental frequency of the self-heating current to be the second frequency; or
if the expected frequency is not greater than the second preset frequency, after the fundamental frequency of the drive current is less than the second preset frequency under the deceleration condition, controlling the self-heating current value to decrease from the first current value to the second current value, and controlling the fundamental frequency of the self-heating current to increase from the second frequency to the first frequency, where the second current value is close to 0 or equal to 0.

In some embodiments, after controlling the self-heating current value to decrease from the first current value to the second current value, and controlling the fundamental frequency of the self-heating current to increase from the second frequency to the first frequency, the method further includes:
determining whether the stable signal is received, the stable signal indicating that the second motor does not generate the torque pulse ripple that oscillates back and forth; and
when the stable signal is received, controlling the self-heating current value to increase from the second current value to the first current value, and maintaining the fundamental frequency of the self-heating current to be the first frequency; or
when the stable signal is not received, maintaining the self-heating current value to be the second current value, maintaining the fundamental frequency of the self-heating current to be the first frequency, and after the stable signal is received, controlling the self-heating current value to increase from the second current value to the first current value, and maintaining the fundamental frequency of the self-heating current to be the first frequency.

According to a third aspect, an embodiment of the present disclosure provides an apparatus for inhibiting vehicle vibration during self-heating of a battery. The apparatus is applied to a vehicle including a power battery pack, a first motor, and a second motor, and the apparatus includes:
a rotation control module, configured to control the power battery pack to output a drive current to the first motor to drive the first motor to rotate, the first motor dragging, when rotating, the second motor to rotate;
a self-heating control module, configured to control the power battery pack to output a self-heating current to the second motor to self-heat a power battery;
an obtaining module, configured to obtain a real-time rotation speed of the first motor; and
a frequency control module, configured to control a fundamental frequency of the self-heating based on the real-time rotation speed, to stagger the fundamental frequency and the real-time rotation speed.

In some embodiments, the frequency control module includes:
a first control unit, configured to: when the real-time rotation speed falls within a first rotation speed range, control the fundamental frequency to be a first frequency; and
a second control unit, configured to: when the real-time rotation speed falls within a second rotation speed range, control the fundamental frequency to be a second frequency, where any rotation speed in the second rotation speed range is greater than any rotation speed in the first rotation speed range, and the second frequency is less than the first frequency.

In some embodiments, the frequency control module includes:
a condition control frequency unit, configured to control the fundamental frequency based on the real-time rotation speed and a real-time condition, to stagger the fundamental frequency and the real-time rotation speed, where the real-time condition includes: an acceleration condition or a deceleration condition.

In some embodiments, the condition control frequency unit includes:
an expected rotation speed subunit, configured to determine an expected rotation speed based on a pedaling degree of an acceleration pedal under the acceleration condition or a pedaling degree of a deceleration pedal under the deceleration condition, where the expected rotation speed indicates a rotation speed of a motor corresponding to a vehicle speed that a driver expects to achieve; and
a condition control subunit, configured to control a self-heating current value and the fundamental frequency based on a value relationship between the expected rotation speed and multiple preset rotation speeds, and a value relationship between the real-time rotation speed and the multiple preset rotation speeds, in combination with the real-time condition.

In some embodiments, the multiple preset rotation speeds include: a first preset rotation speed and a second preset rotation speed; and
the condition control subunit with configured to:
if the expected rotation speed is not greater than the second preset rotation speed, in a process in which the real-time rotation speed increases to the expected rotation speed under the acceleration condition, control the self-heating current value to be a first current value, and control the fundamental frequency to be the first frequency; or
if the expected rotation speed is greater than the second preset rotation speed, in a process in which the real-time rotation speed increases to a rotation speed less than the first preset rotation speed under the acceleration condition, control the self-heating current value to be a first current value, and control the fundamental frequency to be the first frequency; and
in a process in which the real-time rotation speed increases from the first preset rotation speed to the expected rotation speed, control the self-heating current value to decrease from the first current value to a second current value, and control the fundamental frequency to decrease from the first frequency to the second frequency, where the second current value is close to 0 or equal to 0.

In some embodiments, the condition control subunit is further specifically configured to:
determine whether a stable signal is received, the stable signal indicating that the second motor does not generate a torque pulse ripple that oscillates back and forth; and
when the stable signal is received, control the self-heating current value to increase from the second current value to the first current value, and maintain the fundamental frequency to be the second frequency; or
when the stable signal is not received, maintain the self-heating current value to be the second current value, maintain the fundamental frequency to be the second frequency, and after the stable signal is received, control the self-heating current value to increase from the second current value to the first current value, and maintain the fundamental frequency to be the second frequency.

In some embodiments, the multiple preset rotation speeds include: the first preset rotation speed and the second preset rotation speed; and
the condition control subunit is further specifically configured to:
if the expected rotation speed is greater than the second preset rotation speed, in a process in which the real-time rotation speed decreases to the expected rotation speed under the deceleration condition, control the self-heating current value to be the first current value, and control the fundamental frequency to be the second frequency; or
if the expected rotation speed is not greater than the second preset rotation speed, after the real-time rotation speed is less than the second preset rotation speed under the deceleration condition, control the self-heating current value to decrease from the first current value to the second current value, and control the fundamental frequency to increase from the second frequency to the first frequency, where the second current value is close to 0 or equal to 0.

In some embodiments, the condition control subunit is further specifically configured to:
determine whether the stable signal is received, the stable signal indicating that the second motor does not generate the torque pulse ripple that oscillates back and forth; and
when the stable signal is received, control the self-heating current value to increase from the second current value to the first current value, and maintain the fundamental frequency to be the first frequency; or
when the stable signal is not received, maintain the self-heating current value to be the second current value, maintain the fundamental frequency to be the first frequency, and after the stable signal is received, control the self-heating current value to increase from the second current value to the first current value, and maintain the fundamental frequency to be the first frequency.

According to a fourth aspect, an embodiment of the present disclosure further provides another apparatus for inhibiting vehicle vibration during self-heating of a battery. The apparatus is applied to a vehicle including a power battery pack, a first motor, and a second motor, and the apparatus includes:
a rotation and dragging module, configured to control the power battery pack to output a drive current to the first motor to drive the first motor to rotate, the first motor dragging, when rotating, the second motor to rotate;
a current self-heating module, configured to control the power battery pack to output a self-heating current to the second motor to self-heat a power battery;
a drive fundamental frequency obtaining module, configured to obtain a fundamental frequency of the drive current of the first motor; and
a self-heating fundamental frequency control module, configured to control a fundamental frequency of the self-heating current based on the fundamental frequency of the drive current, to stagger the fundamental frequency of the self-heating current and the fundamental frequency of the drive current.

In some embodiments, the self-heating fundamental frequency control module includes:
a first unit, configured to: when the fundamental frequency of the drive current falls within a first frequency range, control the fundamental frequency of the self-heating current to be a first frequency; and
a second unit, configured to: when the fundamental frequency of the drive current falls within a second frequency range, control the fundamental frequency of the self-heating current to be a second frequency, where any frequency in the second frequency range is greater than any frequency in the first frequency range, and the second frequency is less than the first frequency.

In some embodiments, the self-heating fundamental frequency control module includes:
a frequency staggering control unit, configured to control the fundamental frequency of the self-heating current based on the fundamental frequency of the drive current and a real-time condition, to stagger the fundamental frequency of the self-heating current and the fundamental frequency of the drive current, where the real-time condition includes: an acceleration condition or a deceleration condition.

In some embodiments, the frequency staggering control unit includes:
a condition and expected rotation speed subunit, configured to determine an expected rotation speed based on a pedaling degree of an acceleration pedal under the acceleration condition or a pedaling degree of a deceleration pedal under the deceleration condition, where the expected rotation speed indicates a rotation speed of a motor corresponding to a vehicle speed that a driver expects to achieve;
an expected frequency determining subunit, configured to determine, based on the expected rotation speed, an expected frequency corresponding to the expected rotation speed; and
a frequency staggering control subunit, configured to control a self-heating current value and the fundamental frequency of the self-heating current based on a value relationship between the expected frequency and a plurality of preset frequencies, and a value relationship between the fundamental frequency of the drive current and the plurality of preset frequencies, in combination with the real-time condition.

In some embodiments, the plurality of preset frequencies include: a first preset frequency and a second preset frequency; and
the frequency staggering control subunit is specifically configured to:
if the expected frequency is not greater than the second preset frequency, in a process in which the fundamental frequency of the drive current increases to the expected frequency under the acceleration condition, control the self-heating current value to be a first current value, and control the fundamental frequency of the self-heating current to be the first frequency; or
if the expected frequency is greater than the second preset frequency, in a process in which the fundamental frequency of the drive current increases to a frequency less than the first preset frequency under the acceleration condition, control the self-heating current value to be a first current value, and control the fundamental frequency of the self-heating current to be the first frequency; and
in a process in which the fundamental frequency of the drive current increases from the first preset frequency to the expected frequency, control the self-heating current value to decrease from the first current value to a second current value, and control the fundamental frequency of the self-heating current to decrease from the first frequency to the second frequency, where the second current value is close to 0 or equal to 0.

In some embodiments, the frequency staggering control subunit is further specifically configured to:
determine whether a stable signal is received, the stable signal indicating that the second motor does not generate a torque pulse ripple that oscillates back and forth; and
when the stable signal is received, control the self-heating current value to increase from the second current value to the first current value, and maintain the fundamental frequency of the self-heating current to be the second frequency; or
when the stable signal is not received, maintain the self-heating current value to be the second current value, maintain the fundamental frequency of the self-heating current to be the second frequency, and after the stable signal is received, control the self-heating current value to increase from the second current value to the first current value, and maintain the fundamental frequency of the self-heating current to be the second frequency.

In some embodiments, the plurality of preset frequencies include: a first preset frequency and a second preset frequency; and
the frequency staggering control subunit is further specifically configured to:
if the expected frequency is greater than the second preset frequency, in a process in which the fundamental frequency of the drive current decreases to the expected frequency under the deceleration condition, control the self-heating current value to be the first current value, and control the fundamental frequency of the self-heating current to be the second frequency; or
if the expected frequency is not greater than the second preset frequency, after the fundamental frequency of the drive current is less than the second preset frequency under the deceleration condition, control the self-heating current value to decrease from the first current value to the second current value, and control the fundamental frequency of the self-heating current to increase from the second frequency to the first frequency, where the second current value is close to 0 or equal to 0.

In some embodiments, the frequency staggering control subunit is further specifically configured to:
determine whether the stable signal is received, the stable signal indicating that the second motor does not generate the torque pulse ripple that oscillates back and forth; and
when the stable signal is received, control the self-heating current value to increase from the second current value to the first current value, and maintain the fundamental frequency of the self-heating current to be the first frequency; or
when the stable signal is not received, maintain the self-heating current value to be the second current value, maintain the fundamental frequency of the self-heating current to be the first frequency, and after the stable signal is received, control the self-heating current value to increase from the second current value to the first current value, and maintain the fundamental frequency of the self-heating current to be the first frequency.

According to a fifth aspect, an embodiment of the present disclosure provides a vehicle. The vehicle includes: a controller, configured to perform the method for inhibiting vehicle vibration during self-heating of a battery according to any one of the first aspect; or
configured to perform the method for inhibiting vehicle vibration during self-heating of a battery according to any one of the second aspect.

The method for inhibiting vehicle vibration during self-heating of a battery provided in the present disclosure is applied to the vehicle including the power battery pack, the first motor, and the second motor. Specifically, during operation, the power battery pack is controlled to output the drive current to the first motor to drive the first motor to rotate, and the first motor drags, when rotating, the second motor to rotate. The power battery pack is controlled to output the self-heating current to the second motor to self-heat the power battery.

The method for inhibiting vehicle vibration during self-heating of a battery provided in the present disclosure is proposed based on a breakthrough result, by a person who discloses the present disclosure, of a direct cause of jitters of the second motor. When the power battery pack is controlled to output the drive current to the first motor to drive the first motor to rotate, the first motor drags, when rotating, the second motor to rotate, and the power battery pack is controlled to output the self-heating current to the second motor to self-heat the power battery, the real-time rotation speed of the first motor is obtained, and the fundamental frequency of the self-heating is controlled based on the real-time rotation speed. The person who discloses the present disclosure finds that when the fundamental frequency of the self-heating that provides a heating energy source has a numerical relationship with a real-time rotation speed of the second motor, the jitters of the second motor are caused. Therefore, based on the real-time rotation speed of the first motor, the fundamental frequency of the self-heating is controlled, to cause the two to fail to meet a numerical relationship. In this case, the jitters of the second motor can be eliminated. That is, the fundamental frequency of the heating source is changed, to stagger the fundamental frequency of the self-heating and the real-time rotation speed, so that the jitters of the second motor can be eliminated, and the vehicle does not vibrate, and shortening a life span of the second motor is further avoided while driving experience of passengers is improved.

### BRIEF DESCRIPTION OF THE DRAWINGS

Various other advantages and benefits become clear to a person of ordinary skill in the art by reading the following detailed descriptions of exemplary implementations. The accompanying drawings are merely used to show the preferable implementations, and are not considered as limitations to the present disclosure. Throughout the accompanying drawings, the same reference numerals are used to represent the same components. In the accompanying drawings:
FIG. 1 is a flowchart of a method for inhibiting vehicle vibration during self-heating of a battery according to an embodiment of the present disclosure;
FIG. 2 is a diagram of a circuit structure of a power battery, a first motor, and a second motor according to an embodiment of the present disclosure;
FIG. 3 is an example of rotation speed-frequency curve chart according to an embodiment of the present disclosure;
FIG. 4 is a flowchart of another method for inhibiting vehicle vibration during self-heating of a battery according to another embodiment of the present disclosure;
FIG. 5 is a block diagram of an apparatus for inhibiting vehicle vibration during self-heating of a battery according to an embodiment of the present disclosure; and
FIG. 6 is a block diagram of another apparatus for inhibiting vehicle vibration during self-heating of a battery according to an embodiment of the present disclosure.

### DETAILED DESCRIPTION

To make the foregoing objectives, features, and advantages of the present disclosure clearer and easier to understand, the following further describes the present disclosure in detail with reference to the accompanying drawings and specific implementations. It should be understood that the specific embodiments described herein are only used to explain the present disclosure, are merely some rather than all of embodiments of the present disclosure, and are not used to limit the present disclosure.

An inventor finds that, currently, a battery pack of an electric vehicle is mostly self-heated when the vehicle is stopped, and is rarely heated during traveling of the vehicle. For an electric vehicle with multiple motors, for example, a four-wheel drive electric vehicle, some motors may be used for driving, and the other motors may be used for self-heating a battery. In this case, the battery may be self-heated during traveling. However, the inventor finds that, during traveling, such a self-heating manner currently causes the motor used for self-heating to jitter, thereby causing the entire vehicle to vibrate. A skilled person considers that this is caused by a jitter problem of a drive motor system. For example, when the electric vehicle starts to travel or travels within a speed range, torque of a drive motor jumps instantly, thereby causing the motor used for self-heating to jitter, and causing the entire vehicle to vibrate.

Based on the above cognition, there are currently two methods to resolve the problem:
One is to reduce vibration of the entire vehicle by installing a vibration damper. The other is to calculate a torque jitter quantity based on a change in an angular velocity and rotational inertia of the drive motor, and to control rotation of the drive motor in combination with the torque jitter quantity, to reduce the vibration of the entire vehicle.

However, for the above two methods, the first method requires additional installation of the vibration damper. In this case, corresponding hardware costs of the vehicle are increased and a vehicle space is further occupied. Although the second method does not require additional hardware, control logic is complex, and more importantly, the jitters of the motor used for self-heating are not fundamentally eliminated.

Because a direct cause of the jitters of the motor used for self-heating is not found fundamentally, let alone how to resolve the problem, the problem of the jitters of the motor used for self-heating is not essentially resolved by using the above two methods. In other words, only the symptom is treated instead of the root cause.

Based on the above problem, the inventor proposes a targeted method for inhibiting vehicle vibration during self-heating of a battery. The technical solutions of the present disclosure are described below in detail.

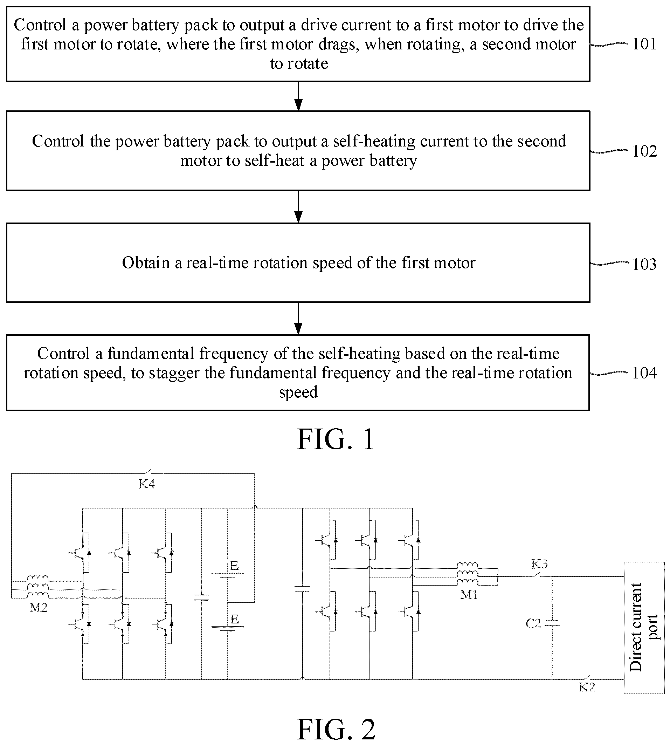

FIG. 1 is a flowchart of a method for inhibiting vehicle vibration during self-heating of a battery according to an embodiment of the present disclosure. The method includes the following steps:
In step 101, a power battery pack is controlled to output a drive current to a first motor to drive the first motor to rotate, where the first motor drags, when rotating, a second motor to rotate.

The method for inhibiting vehicle vibration during self-heating of a battery provided in this embodiment of the present disclosure is applicable to an electric vehicle with at least two motors, and the electric vehicle is operated in a state that some of the motors drive the entire vehicle and the other motors serve as self-heating motors, that is, the first motor drives, by using energy provided by the power battery pack, the entire vehicle to run, and simultaneously, the first motor drags, when rotating, the second motor (that is, the motor used for self-heating) to rotate. In this embodiment of the present disclosure, the first motor may be defined as a synchronous motor or an asynchronous motor. The first motor drives, by using the energy provided by the power battery pack, the entire vehicle to run, and drags, when rotating, the second motor to rotate. The second motor is defined as an asynchronous motor, that is, the motor used for self-heating.

In step 102, the power battery pack is controlled to output a self-heating current to the second motor to self-heat a power battery.

While the first motor drags the second motor to rotate, to self-heat the power battery, the power battery pack needs to output the self-heating current to the second motor, to self-heat the power battery by using the second motor and a control loop of the second motor.

FIG. 2 is a diagram of a circuit structure of a power battery, a first motor, and a second motor according to an embodiment of the present disclosure. In FIG. 2, E represents the power battery, M1 represents the first motor (in other words, a drive motor), and M2 represents the second motor (in other words, a motor used for self-heating). The power battery is divided into a first battery pack and a second battery pack. A neutral line is led out from a neutral point of the second motor M2 and is connected between the first battery pack and the second battery pack. The first motor M1 rotates by using energy provided by the power battery E, to drive an entire vehicle to run. Simultaneously, the first motor M1 drags, when rotating, the second motor M2 to rotate. The power battery E outputs a self-heating current to the second motor M2, to self-heat the power battery E by using the second motor M2 and a control loop of the second motor. A control switch K4 is a control switch of a self-heating current loop. When self-heating is performed, the control switch K4 needs to be closed. Upper and lower bridge arms of a motor inverter connected to M2 are alternately turned on and off to implement alternate charging and discharging between the first battery pack, the second battery pack, and a motor winding. During the charging and discharging, an internal resistor of the battery generates heat, to self-heat the battery. A specific on-off sequence may be but is not limited to the following sequence: (1) The upper bridge arm of the motor inverter is turned on, and the first battery pack (an upper part) is discharged, to charge the motor winding. (2) The lower bridge arm of the motor inverter is turned on, and the motor winding freewheels to charge the second battery pack (a lower part). (3) The lower bridge arm of the motor inverter is turned on, and the second battery pack charges the motor winding. (4) The upper bridge arm of the motor inverter is turned on, and the motor winding freewheels to charge the first battery pack. When self-heating is not required, the control switch K4 is open. For the working principles of other components such as a direct current port, direct current charging loop switches K2 and K3, and a capacitor C2, and the working principle of another circuit loop, refer to the currently known working principle of a circuit loop of an electric vehicle. Details are not repeated herein.

In step 103, a real-time rotation speed of the first motor is obtained.

After performing extensive comprehensive research and testing on a self-heating manner, the principle, a motor characteristic, and the like, an inventor achieves a breakthrough result that a direct cause of jitters of the motor used for self-heating is as follows: When a fundamental frequency of a heating source that provides a heating energy source has a numerical relationship with a real-time rotation speed of the motor used for self-heating, for example, when the fundamental frequency of the heating source has a multiple or functional relationship with the real-time rotation speed of the motor used for self-heating, the motor used for self-heating is caused to jitter.

In general, because the first motor is the drive motor that drags the second motor to rotate, it may be considered that a rotation speed of the second motor is equal to a rotation speed of the first motor. For example, if a quantity of pole pairs of the first motor is 1, it may be known, according to the general industrial frequency of 50 Hz in China, that the rotation speed of the first motor is 3000 rpm. In this case, an actual rotation speed of the second motor may be 2960 rpm that is very close to 3000 rpm. Therefore, it may be considered that the rotation speed of the second motor is 3000 rpm. Therefore, the real-time rotation speed of the first motor needs to be first obtained. This is essentially equivalent to obtaining a real-time rotation speed of the second motor.

In step 104, a fundamental frequency of the self-heating current is controlled based on the real-time rotation speed, to stagger the fundamental frequency and the real-time rotation speed.

After the real-time rotation speed of the first motor is obtained, the fundamental frequency of the self-heating may be controlled, to stagger the fundamental frequency of the self-heating and the real-time rotation speed of the first motor (that is, to break a numerical relationship between the two). In this case, a jitter problem of the second motor can be resolved fundamentally.

A person skilled in the art should understand that the fundamental frequency of the self-heating may be controlled by controlling the on and off of the upper and lower bridge arms of the motor inverter connected to the second motor M2. The vehicle may further include a controller for controlling the motor inverter. All relevant content is related art and is not repeated herein.

Methods for controlling the fundamental frequency of the self-heating based on the real-time rotation speed, to stagger the fundamental frequency of the self-heating and the real-time rotation speed may be specifically classified into two methods.

In one method, when the real-time rotation speed falls within a first rotation speed range, the fundamental frequency is controlled to be a first frequency; and when the real-time rotation speed falls within a second rotation speed range, the fundamental frequency is controlled to be a second frequency, where any rotation speed in the second rotation speed range is greater than any rotation speed in the first rotation speed range, and the second frequency is less than the first frequency.

Because the fundamental frequency of the self-heating and the real-time rotation speed of the first motor need to be staggered, to break the numerical relationship between the two, a rotation speed is divided into two rotation speed ranges: the first rotation speed range and the second rotation speed range, and the fundamental frequency is set to two frequencies: the first frequency and the second frequency.

It is set that the first rotation speed range has no numerical relationship with the first frequency, and the second rotation speed range has no numerical relationship with the second frequency. When the real-time rotation speed falls within the first rotation speed range, the jitter problem of the second motor can be resolved only by controlling the fundamental frequency to be the first frequency. When the real-time rotation speed falls within the second rotation speed range, the jitter problem of the second motor can be resolved only by controlling the fundamental frequency to be the second frequency. In this embodiment of the present disclosure, it is set that any rotation speed in the second rotation speed range is greater than any rotation speed in the first rotation speed range, and that the second frequency is less than the first frequency. Certainly, it may alternatively be set that any rotation speed in the second rotation speed range is less than any rotation speed in the first rotation speed range, and that the second frequency is greater than the first frequency, provided that the rotation speed range has no numerical relationship with the frequency.

In the other method, in consideration that the self-heating is implemented by using the second motor, and a winding loop and the control loop of the second motor, and that shock of a change in the fundamental frequency on the second motor and impact on the self-heating current, the self-heating current needs to be adjusted in advance when the fundamental frequency is to be changed. Therefore, when the fundamental frequency of the self-heating is controlled to stagger the fundamental frequency and the real-time rotation speed, a self-heating current value of the battery further needs to be controlled in advance. In addition, in consideration that frequency conversion requires a period of time, and that an acceleration condition and a deceleration condition need to be used differently, the method is: controlling the fundamental frequency of the self-heating based on the real-time rotation speed and a real-time condition, to stagger the fundamental frequency of the self-heating and the real-time rotation speed. The so-called real-time condition includes: the acceleration condition or the deceleration condition.

A specific method for controlling the self-heating current value of the battery and the fundamental frequency of the self-heating includes the following steps.

In step V1, an expected rotation speed is determined based on a pedaling degree of an acceleration pedal under the acceleration condition or a pedaling degree of a deceleration pedal under the deceleration condition, where the expected rotation speed indicates a rotation speed of a motor corresponding to a vehicle speed that a driver expects to achieve.

A real-time rotation speed of a motor of an electric vehicle is generally collected by a rotation speed sensor. Real-time conditions of the vehicle during traveling are generally classified into the acceleration condition and the deceleration condition. When the driver steps on the acceleration pedal, the acceleration condition naturally occurs. When the driver steps on the deceleration pedal (in other words, a brake pedal), the deceleration condition naturally occurs. The information may specifically be sent to a controller of the entire vehicle, or actively obtained by a controller of the entire vehicle. Alternatively, when the vehicle is under control of a driver assistance system or an automatic driving system, the controller of the vehicle may automatically control acceleration and deceleration of the vehicle based on a traveling requirement of the vehicle, and the acceleration and deceleration also corresponds to the acceleration condition and the deceleration condition respectively.

In an embodiment, when the driver steps on the acceleration pedal or the deceleration pedal, or when the controller automatically controls the acceleration or deceleration of the vehicle, it may be reflected whether the vehicle is required to accelerate or decelerate, and the expected rotation speed may be determined based on the pedaling degree of the acceleration pedal, the pedaling degree of the deceleration pedal, or a signal sent by the controller. The so-called expected rotation speed indicates the rotation speed of the motor corresponding to the vehicle speed expected by the driver. For example, a current vehicle speed is 30 km/h, and a rotation speed of a corresponding motor is 800 rpm. The driver steps on the acceleration pedal, expecting to increase the vehicle speed to 80 km/h. The rotation speed of the motor corresponding to 80 km/h is 2600 rpm. In this case, an expected rotation speed is 2600 rpm. The principle of the expected rotation speed under the deceleration condition is the same as the foregoing example. Details are not described herein.

Certainly, the expected rotation speed may alternatively be determined in another manner. For example, the driver can directly set a required speed to 80 km/h through a hardware operation, by using a language command, or in another manner, and in this case, the controller of the entire vehicle may alternatively determine the expected rotation speed.

In step V2, a self-heating current value and the fundamental frequency are controlled based on a value relationship between the expected rotation speed and multiple preset rotation speeds, and a value relationship between the real-time rotation speed and the multiple preset rotation speeds, in combination with the real-time condition.

After the expected rotation speed is determined, the self-heating current value may be controlled based on the value relationship between the expected rotation speed and the multiple preset rotation speeds, and the value relationship between the real-time rotation speed and the multiple preset rotation speeds, and in combination with whether the real-time condition is acceleration or deceleration, and the fundamental frequency is controlled to be a first frequency, or the fundamental frequency is controlled to change from a first frequency to a second frequency, or the fundamental frequency is controlled to be a second frequency.

Generally, there are currently two fundamental frequencies of the self-heating: the first frequency and the second frequency. For example, the frequencies may be 100 Hz and 300 Hz. Certainly, the fundamental frequency of the self-heating may be specifically determined based on an actual hardware device, a requirement, and comprehensive consideration of multiple factors.

Because the fundamental frequency and the real-time rotation speed needs to be staggered, to avoid a numerical relationship with the real-time rotation speed, a rotation speed that has a numerical relationship with the fundamental frequency may be determined based on the two fundamental frequencies. In consideration of a slight difference between the rotation speed of the second motor and the rotation speed of the first motor, as well as the precision of obtaining a rotation speed, based on the determined rotation speed, a rotation speed range within a range above and below the rotation speed is determined as a rotation speed sensitive area. It is considered that the rotation speed of the second motor falls within the rotation speed sensitive area. Therefore, the rotation speed of the second motor may have a numerical relationship with the fundamental frequency.

In addition, it is further considered that it takes a period of time to control the fundamental frequency to increase or decrease, and the fundamental frequency cannot be controlled to decrease from the first frequency to the second frequency, or to increase from the second frequency to the first frequency within a very short time period. A transition area is further required. The two factors that are the transition area and the rotation speed sensitive area are combined. Therefore, two preset rotation speeds are set, and the fundamental frequency and the self-heating current value are controlled in combination with an actual rotation speed and the expected rotation speed.

For example, it is assumed that the first frequency is 300 Hz, the second frequency is 100 Hz, a quantity of pole pairs of the second motor is 1, a rotation speed sensitive area corresponding to the first frequency 300 Hz is 2500 rpm to 4000 rpm, and a rotation speed sensitive area corresponding to the second frequency 100 Hz is 800 rpm to 1500 rpm. It is considered that it takes a period of time to control the fundamental frequency to decrease from 300 Hz to 100 Hz, or to increase from 100 Hz to 300 Hz. Therefore, when it is determined that the rotation speed is less than 1500 rpm, the rotation speed may have a numerical relationship with the fundamental frequency 100 Hz. When it is determined that the rotation speed is greater than 2500 rpm, the rotation speed may have a numerical relationship with the fundamental frequency 300 Hz. A first preset rotation speed is determined to be 1500 rpm, a second preset rotation speed is determined to be 2500 rpm, and a range of 1500 rpm to 2500 rpm is determined as the transition area in which the fundamental frequency is controlled to decrease from 300 Hz to 100 Hz, or to increase from 100 Hz to 300 Hz.

During specific implementation, the acceleration condition and the deceleration condition are slightly different, and are separately described below.

For the acceleration condition, step V2 may specifically include the following steps:

In step V2a, if the expected rotation speed is not greater than the second preset rotation speed, the real-time rotation speed increases from 0 to the expected rotation speed under the acceleration condition, the self-heating current value is controlled to be a first current value, and the fundamental frequency is controlled to be the first frequency.

The real-time rotation speed of the motor is less than the first preset rotation speed, and may have a numerical relationship with the second frequency. Therefore, when the real-time rotation speed of the motor is less than the second preset rotation speed, the fundamental frequency is controlled to be the first frequency. However, when the real-time rotation speed of the motor is greater than the second preset rotation speed, there may be a numerical relationship with the first frequency. Therefore, when the real-time rotation speed of the motor is greater than the second preset rotation speed, the fundamental frequency is controlled to be the second frequency.

It takes a period of time to control a change in the fundamental frequency. Therefore, when the real-time rotation speed is not greater than the second preset rotation speed, there is a need to start controlling the change in the fundamental frequency. However, if the expected rotation speed is not greater than the second preset rotation speed, that is, the real-time rotation speed of the motor is finally stabilized below the second preset rotation speed, there is no need to control the change in the fundamental frequency. Therefore, there is a need to first determine a value relationship between the expected rotation speed and the second preset rotation speed.

If the expected rotation speed is not greater than the second preset rotation speed, there is no need to control the change in the fundamental frequency, only the fundamental frequency needs to be controlled to be the first frequency. In addition, to ensure self-heating efficiency, the self-heating current value is controlled to be the first current value.

The above example is followed. Assuming that the expected rotation speed is 2450 rpm less than 2500 rpm, only the fundamental frequency needs to be controlled to be 300 Hz, to avoid a numerical relationship with the real-time rotation speed. In addition, to ensure the self-heating efficiency, the self-heating current value is controlled to be the first current value, for example, 540 A. Therefore, in an entire process in which the real-time rotation speed of the second motor increases from 0 to 2450 rpm, the self-heating current value is controlled to be 540 A, and the fundamental frequency of the self-heating is controlled to be 300 Hz, to heat the power battery.

In step V2b1, if the expected rotation speed is greater than the second preset rotation speed, in a process in which the real-time rotation speed increases from 0 to a rotation speed less than the first preset rotation speed under the acceleration condition, the self-heating current value is controlled to be the first current value, and the fundamental frequency is controlled to be the first frequency.

In step V2b2, in a process in which the real-time rotation speed increases from the first preset rotation speed to a speed not greater than the second preset rotation speed, the self-heating current value is controlled to decrease from the first current value to a second current value, and the fundamental frequency is controlled to decrease from the first frequency to the second frequency, where the second current value is close to 0 or equal to 0.

If the expected rotation speed is greater than the second preset rotation speed, the fundamental frequency needs to be controlled to change. To ensure the self-heating efficiency, in consideration of a requirement that the fundamental frequency cannot be the second frequency when the real-time rotation speed is less than the first preset rotation speed, and to reduce shock of the fundamental frequency on the second motor and impact on the self-heating current, self-heating is performed by using the first current value and the first frequency in a process in which the real-time rotation speed of the motor is less than the first preset rotation speed. However, after the real-time rotation speed of the motor is greater than the first preset rotation speed, the self-heating current value is first reduced to the second current value, and then controlling the fundamental frequency to decrease from the first frequency to the second frequency is started, to decrease the fundamental frequency to 100 Hz before the real-time rotation speed of the motor increases to the second preset rotation speed, thereby preventing the second motor from jittering.

The above example is followed. Assuming that the expected rotation speed is 2550 rpm greater than 2500 rpm, in an entire process in which the real-time rotation speed of the second motor increases from 0 to 1500 rpm, the self-heating current value is controlled to be 540 A, and the fundamental frequency of the self-heating source is controlled to be 300 Hz. When the real-time rotation speed of the motor increases to 1500 rpm, the self-heating current value is first controlled to decrease to a value close to 0 or directly to 0. Then controlling the fundamental frequency to decrease from 300 Hz to 100 Hz is started, to decrease the fundamental frequency to 100 Hz before the real-time rotation speed of the motor increases to 2500 rpm. Because no rotation speed in the transition area has a numerical relationship with the fundamental frequency, regardless of whether the fundamental frequency is controlled to decrease from 300 Hz to 100 Hz or to increase from 100 Hz to 300 Hz, the second motor is not caused to jitter.

After the self-heating current value is controlled to decrease from the first current value to the second current value, and the fundamental frequency is controlled to decrease from the first frequency to the second frequency, the following steps are further included.

In step V2b3, it is determined whether a stable signal is received, where the stable signal indicates that the second motor does not generate a torque pulse ripple that oscillates back and forth.

In step V2b4, when the stable signal is received, the self-heating current value is controlled to increase from the second current value to the first current value, and the fundamental frequency is maintained to be the second frequency.

In step V2b5, when the stable signal is not received, the self-heating current value is maintained to be the second current value, the fundamental frequency is maintained to be the second frequency, and after the stable signal is received, the self-heating current value is controlled to increase from the second current value to the first current value, and the fundamental frequency is maintained to be the second frequency.

Controlling the fundamental frequency to decrease from the first frequency to the second frequency is essentially a frequency conversion process. In the frequency conversion process, the second motor may be shocked, thereby causing torque of the second motor to fluctuate, or causing the second motor to jitter. However, jitters may or may not occur in the frequency conversion process. Even if the jitters occur, the jitters are much weaker than jitters caused by the numerical relationship between the fundamental frequency and the real-time rotation speed of the motor, and therefore, may be ignored.

However, the self-heating current value may be changed back to the first current value only after it is determined that the second motor does not jitter and is in a stable state. Therefore, when being in the stable state, the second motor may send the stable signal to the controller of the entire vehicle. The stable signal indicates that the second motor does not generate the torque pulse ripple that oscillates back and forth. Certainly, the controller of the entire vehicle may alternatively determine, based on whether torque data of the second motor fluctuates, whether the second motor is stable.

When it is determined that the stable signal is received, the self-heating current value may be controlled to increase from the second current value to the first current value, to ensure the self-heating efficiency, and the fundamental frequency is maintained to be the second frequency. After that, regardless of whether the real-time rotation speed of the motor has not temporarily reached 2500 rpm yet or is greater than 2500 rpm, self-heating is performed by using the first current value and the second frequency.

Another possibility is that frequency conversion is completed, but stabilization of a state of the second motor is relatively delayed. In this case, the stable signal is not received, the self-heating current value continues to be maintained to be the second current value, and the fundamental frequency is maintained to be the second frequency. After the stable signal is received, the self-heating current value is then controlled to increase from the second current value to the first current value, and the fundamental frequency is maintained to be the second frequency.

The above example is followed. Assuming that the expected rotation speed is 2550 rpm greater than 2500 rpm, in an entire process in which the real-time rotation speed of the second motor increases from 0 to 1500 rpm, the self-heating current value is controlled to be 540 A, and the fundamental frequency of the self-heating is controlled to be 300 Hz. When the real-time rotation speed of the motor increases to 1500 rpm, the self-heating current value is first controlled to decrease to a value close to 0 or directly to 0. Then controlling the fundamental frequency to decrease from 300 Hz to 100 Hz is started, to decrease the fundamental frequency to 100 Hz before the real-time rotation speed of the motor increases to 2500 rpm. Assuming that when the real-time rotation speed of the motor increases to 2280 rpm, the frequency conversion is completed, and the state of the motor is stable, the stable signal is received, the self-heating current value is controlled to increase from a value close to 0 or 0 to 540 A, and the fundamental frequency of the heating source continues to be maintained to be 100 Hz, until the real-time rotation speed of the motor increases to 2550 rpm. Assuming that when the real-time rotation speed of the motor increases to 2280 rpm, the frequency conversion is completed, but the state of the motor is unstable, the stable signal is not received, the self-heating current value is controlled still to be a value close to 0 or 0, and the fundamental frequency of the self-heating continues to be maintained to be 100 Hz. When the real-time rotation speed of the motor increases to 2510 rpm, the state of the motor is stable, and the stable signal is received. After that, the self-heating current value is then controlled to increase from a value close to 0 or 0 to 540 A again, and the fundamental frequency of the self-heating continues to be maintained to be 100 Hz, until the real-time rotation speed of the motor increases to 2550 rpm. It may be understood that in an extreme case, when the real-time rotation speed of the motor increases to 2550 rpm, the stable signal has not been received yet. In this case, the vehicle continues to travel at a speed corresponding to the real-time rotation speed 2550 rpm of the motor, and the fundamental frequency of the self-heating continues to be maintained at 100 Hz. After the stable signal is received, the self-heating current value is controlled to increase from a value close to 0 or 0 to 540 A, and the fundamental frequency of the self-heating continues to be maintained at 100 Hz.

The foregoing describes how to suppress the jitter of the second motor under the acceleration condition. Similarly, for the deceleration condition, step V2 may specifically have the following steps:
In step V2c, if the expected rotation speed is greater than the second preset rotation speed, the real-time rotation speed decreases to the expected rotation speed under the deceleration condition, the self-heating current value is controlled to be a first current value, and the fundamental frequency is controlled to be the second frequency.

Similar to the acceleration condition, if the expected rotation speed is greater than the second preset rotation speed, there is no need to control the change in the fundamental frequency, only the fundamental frequency needs to be controlled to be the second frequency. In addition, to ensure self-heating efficiency, the self-heating current value is controlled to be the first current value.

The above example is followed. Assuming that the expected rotation speed is 2550 rpm greater than 2500 rpm, only the fundamental frequency needs to be controlled to be 100 Hz, to avoid a numerical relationship with the real-time rotation speed. In addition, the self-heating current value is controlled to be 540 A. Therefore, in an entire process in which the real-time rotation speed of the second motor decreases to 2550 rpm, the self-heating current value is controlled to be 540 A, and the fundamental frequency of the self-heating is controlled to be 100 Hz, to heat a battery.

In step V2d1, if the expected rotation speed is not greater than the second preset rotation speed, after the real-time rotation speed is less than the second preset rotation speed under the deceleration condition, the self-heating current value is controlled to decrease from the first current value to a second current value, and the fundamental frequency is controlled to increase from the second frequency to the first frequency, where the second current value is close to 0 or equal to 0.

Unlike the acceleration condition, if the expected rotation speed is not greater than the second preset rotation speed, the fundamental frequency needs to be controlled to change. However, when the real-time rotation speed of the motor is not greater than the second preset rotation speed, the second frequency may change to the first frequency. The self-heating current value is first reduced to the second current value, and then controlling the fundamental frequency to increase from the second frequency to the first frequency is started, to increase the fundamental frequency to 300 Hz before the real-time rotation speed of the motor decreases to the first preset rotation speed, to prevent the second motor from jittering.

The above example is followed. Assuming that the expected rotation speed is 850 rpm far less than 2500 rpm, in a process in which the real-time rotation speed of the second motor decreases from the current rotation speed to a speed close to 2500 rpm, the self-heating current value of the battery is controlled to be 540 A, and the fundamental frequency of the heating source is controlled to be 100 Hz. When the real-time rotation speed of the motor decreases to 2500 rpm, the self-heating current value is first controlled to decrease to a value close to 0 or directly to 0. Then controlling the fundamental frequency to increase from 100 Hz to 300 Hz is started, to increase the fundamental frequency to 300 Hz before the real-time rotation speed of the motor decreases to 1500 rpm.

After the self-heating current value is controlled to decrease from the first current value to the second current value, and the fundamental frequency is controlled to increase from the second frequency to the first frequency, the method further includes the following steps.

In step V2d2, it is determined whether a stable signal is received.

In step V2d3, when the stable signal is received, the self-heating current value is controlled to increase from the second current value to the first current value, and the fundamental frequency is maintained to be the first frequency.

In step V2d4, when the stable signal is not received, the self-heating current value is maintained to be the second current value, the fundamental frequency is maintained to be the first frequency, and after the stable signal is received, the self-heating current value is controlled to increase from the second current value to the first current value, and the fundamental frequency is maintained to be the first frequency.

When it is determined that the stable signal is received, the self-heating current value is controlled to increase from the second current value to the first current value, and the fundamental frequency is maintained to be the first frequency. After that, regardless of whether the real-time rotation speed of the motor temporarily has not reached 1500 rpm yet or is less than 1500 rpm, self-heating is performed by using the first current value and the first frequency.

Another possibility is that the frequency conversion is completed, but stabilization of a state of the second motor is relatively delayed. In this case, the stable signal is not received, the self-heating current value continues to be maintained to be the second current value, and the fundamental frequency is maintained to be the first frequency. After the stable signal is received, the self-heating current value of the battery is controlled to increase from the second current value to the first current value, and the fundamental frequency is maintained to be the first frequency.

The above example is followed. Assuming that the expected rotation speed is 850 rpm, in an entire process in which the real-time rotation speed of the second motor decreases to a speed close to 2500 rpm, the self-heating current value is controlled to be 540 A, and the fundamental frequency of the self-heating is controlled to be 100 Hz. When the real-time rotation speed of the motor decreases to 2500 rpm, the self-heating current value is first controlled to decrease to a value close to 0 or directly to 0. Then controlling the fundamental frequency to increase from 100 Hz to 300 Hz is started, to increase the fundamental frequency to 300 Hz before the real-time rotation speed of the motor decreases to 1500 rpm. Assuming that when the real-time rotation speed of the motor decreases to 2280 rpm, the frequency conversion is completed, and the state of the motor is stable, the stable signal is received, the self-heating current value is controlled to increase from a value close to 0 or 0 to 540 A again, and the fundamental frequency of the heating source continues to be maintained at 300 Hz, until the real-time rotation speed of the motor decreases to 850 rpm. Assuming that when the real-time rotation speed of the motor decreases to 2280 rpm, the frequency conversion is completed, but the state of the motor is unstable, the stable signal is not received, the self-heating current value is controlled to be a value close to 0 or 0, and the fundamental frequency of the self-heating continues to be maintained at 300 Hz. When the real-time rotation speed of the motor decreases to 1800 rpm, the state of the motor is stable, and the stable signal is received. After that, the self-heating current value is controlled to increase from a value close to 0 or 0 to 540 A again, and the fundamental frequency of the self-heating continues to be maintained at 300 Hz, until the real-time rotation speed of the motor decreases to 850 rpm. It may be understood that in an extreme case, when the real-time rotation speed of the motor decreases to 850 rpm, the stable signal has not been received yet. In this case, the vehicle continues to travel at a speed corresponding to the real-time rotation speed 850 rpm of the motor, and the fundamental frequency of the self-heating continues to be maintained to be 300 Hz. After the stable signal is received, the self-heating current value is then controlled to increase from a value close to 0 or 0 to 540 A, and the fundamental frequency of the self-heating continues to be maintained to be 300 Hz.

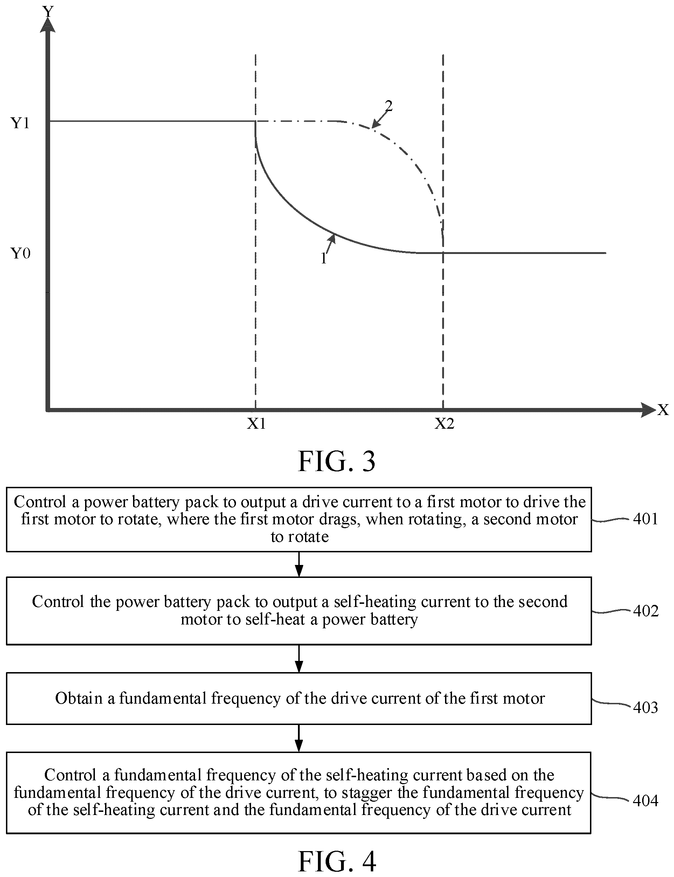

The foregoing frequency conversion of the fundamental frequency may be more intuitively understood by virtue of a rotation speed-frequency curve chart shown in FIG. 3. The X axis represents the real-time rotation speed of the motor, the Y axis represents the fundamental frequency, X1 and X2 respectively represent the first preset rotation speed and the second preset rotation speed, and Y1 and Y0 respectively represent the first frequency and the second frequency. There are two curves between X1 and X2. The solid-line curve 1 represents frequency conversion of the fundamental frequency under the acceleration condition, and the dash-dot-line curve 2 represents frequency conversion of the fundamental frequency under the deceleration condition. FIG. 3 is only for the convenience of intuitively understanding the frequency conversion of the fundamental frequency, and does not represent an actual rotation speed of the corresponding motor when the frequency conversion is performed from the first frequency to the second frequency, or from the second frequency to the first frequency. As described above, it may be understood that the frequency conversion needs to be completed only between X1 and X2, and it is not limited that the frequency conversion is completed at a specific actual rotation speed of the motor.

In addition, it should be noted that, determining a preset rotation speed is further related to a quantity of pole pairs of a motor. Because quantities of pole pairs of motors are different, rotation speeds of the motors are different. For example, if the quantity of pole pairs of the motor is 1, it may be known, according to the general industrial frequency of 50 Hz in China, that the rotation speed of the motor is 3000 rpm. If the quantity of pole pairs of the motor is 2, it may be known, according to the general industrial frequency of 50 Hz in China, that the rotation speed of the motor is 1500 rpm. If the quantity of pole pairs of the motor is 4, it may be known, according to the general industrial frequency of 50 Hz in China, that the rotation speed of the motor is 750 rpm. Then, when the rotation speeds of the motors are different, sensitive areas corresponding to the motors are naturally different. Therefore, preset rotation speeds are also different. However, regardless of how many pole pairs the motor has, the method for inhibiting vibration of an entire vehicle during self-heating of a battery in the present disclosure may be applied, to eliminate jitters of the second motor.

Based on the above method for inhibiting vehicle vibration during self-heating of a battery, in consideration of a relationship between a rotation speed and a frequency, a simple conversion may be performed by using a formula: n = 60f/p (n represents the rotation speed, f represents the frequency, and p represents a quantity of pole pairs). The vehicle may inhibit the vehicle vibration during self-heating of the battery in a rotation speed dimension, or may inhibit the vehicle vibration during self-heating of the battery in a frequency dimension.

Based on the above consideration, an embodiment of the present disclosure further proposes, based on the frequency dimension, another method for inhibiting vehicle vibration during self-heating of a battery. FIG. 4 is a flowchart of another method for inhibiting vehicle vibration during self-heating of a battery according to an embodiment of the present disclosure. The method is also applied to a vehicle including a power battery pack, a first motor, and a second motor, and the method includes the following steps.

In step 401, the power battery pack is controlled to output a drive current to the first motor to drive the first motor to rotate, where the first motor drags, when rotating, the second motor to rotate.

In step 402, the power battery pack is controlled to output a self-heating current to the second motor to self-heat a power battery.

In step 403, a fundamental frequency of the drive current of the first motor is obtained.

In step 404, a fundamental frequency of the self-heating current is controlled based on the fundamental frequency of the drive current, to stagger the fundamental frequency of the self-heating current and the fundamental frequency of the drive current.

In some embodiments, in step 404, that the fundamental frequency of the self-heating current is controlled based on the fundamental frequency of the drive current, to stagger the fundamental frequency of the self-heating current and the fundamental frequency of the drive current includes:
when the fundamental frequency of the drive current falls within a first frequency range, controlling the fundamental frequency of the self-heating current to be a first frequency; and
when the fundamental frequency of the drive current falls within a second frequency range, controlling the fundamental frequency of the self-heating current to be a second frequency, where any frequency in the second frequency range is greater than any frequency in the first frequency range, and the second frequency is less than the first frequency.

In some embodiments, in step 404, that the fundamental frequency of the self-heating current is controlled based on the fundamental frequency of the drive current, to stagger the fundamental frequency of the self-heating current and the fundamental frequency of the drive current includes:
controlling the fundamental frequency of the self-heating current based on the fundamental frequency of the drive current and a real-time condition, to stagger the fundamental frequency of the self-heating current and the fundamental frequency of the drive current, where the real-time condition includes: an acceleration condition or a deceleration condition.

In some embodiments, controlling the fundamental frequency of the self-heating current based on the fundamental frequency of the drive current and the real-time condition, to stagger the fundamental frequency of the self-heating current and the fundamental frequency of the drive current includes:
determining an expected rotation speed based on a pedaling degree of an acceleration pedal under the acceleration condition or a pedaling degree of a deceleration pedal under the deceleration condition, where the expected rotation speed indicates a rotation speed of a motor corresponding to a vehicle speed that a driver expects to achieve;
determining, based on the expected rotation speed, an expected frequency corresponding to the expected rotation speed; and
controlling a self-heating current value and the fundamental frequency of the self-heating current based on a value relationship between the expected frequency and a plurality of preset frequencies, and a value relationship between the fundamental frequency of the drive current and the plurality of preset frequencies, in combination with the real-time condition.

In some embodiments, the plurality of preset frequencies include: a first preset frequency and a second preset frequency; and
controlling the self-heating current value and the fundamental frequency of the self-heating current based on the value relationship between the expected frequency and the plurality of preset frequencies, and the value relationship between the fundamental frequency of the drive current and the plurality of preset frequencies, in combination with the real-time condition includes:
if the expected frequency is not greater than the second preset frequency, in a process in which the fundamental frequency of the drive current increases to the expected frequency under the acceleration condition, controlling the self-heating current value to be a first current value, and controlling the fundamental frequency of the self-heating current to be the first frequency; or
if the expected frequency is greater than the second preset frequency, in a process in which the fundamental frequency of the drive current increases to a frequency less than the first preset frequency under the acceleration condition, controlling the self-heating current value to be a first current value, and controlling the fundamental frequency of the self-heating current to be the first frequency; and
in a process in which the fundamental frequency of the drive current increases from the first preset frequency to the expected frequency, controlling the self-heating current value to decrease from the first current value to a second current value, and controlling the fundamental frequency of the self-heating current to decrease from the first frequency to the second frequency, where the second current value is close to 0 or equal to 0.

In some embodiments, after controlling the self-heating current value to decrease from the first current value to the second current value, and controlling the fundamental frequency of the self-heating current to decrease from the first frequency to the second frequency, the method further includes:
determining whether a stable signal is received, where the stable signal indicates that the second motor does not generate a torque pulse ripple that oscillates back and forth; and
when the stable signal is received, controlling the self-heating current value to increase from the second current value to the first current value, and maintaining the fundamental frequency of the self-heating current to be the second frequency; or
when the stable signal is not received, maintaining the self-heating current value to be the second current value, maintaining the fundamental frequency of the self-heating current to be the second frequency, and after the stable signal is received, controlling the self-heating current value to increase from the second current value to the first current value, and maintaining the fundamental frequency of the self-heating current to be the second frequency.

In some embodiments, the plurality of preset frequencies include: a first preset frequency and a second preset frequency; and
controlling the self-heating current value and the fundamental frequency of the self-heating current based on the value relationship between the expected frequency and the plurality of preset frequencies, and the value relationship between the fundamental frequency of the drive current and the plurality of preset frequencies, in combination with the real-time condition includes:
if the expected frequency is greater than the second preset frequency, in a process in which the fundamental frequency of the drive current decreases to the expected frequency under the deceleration condition, controlling the self-heating current value to be the first current value, and controlling the fundamental frequency of the self-heating current to be the second frequency; or
if the expected frequency is not greater than the second preset frequency, after the fundamental frequency of the drive current is less than the second preset frequency under the deceleration condition, controlling the self-heating current value to decrease from the first current value to the second current value, and controlling the fundamental frequency of the self-heating current to increase from the second frequency to the first frequency, where the second current value is close to 0 or equal to 0.

In some embodiments, after controlling the self-heating current value to decrease from the first current value to the second current value, and controlling the fundamental frequency of the self-heating current to increase from the second frequency to the first frequency, the method further includes:
determining whether the stable signal is received, the stable signal indicating that the second motor does not generate the torque pulse ripple that oscillates back and forth; and
when the stable signal is received, controlling the self-heating current value to increase from the second current value to the first current value, and maintaining the fundamental frequency of the self-heating current to be the first frequency; or
when the stable signal is not received, maintaining the self-heating current value to be the second current value, maintaining the fundamental frequency of the self-heating current to be the first frequency, and after the stable signal is received, controlling the self-heating current value to increase from the second current value to the first current value, and maintaining the fundamental frequency of the self-heating current to be the first frequency.

Different from the method of step 101 to step 104, in the method of step 401 to step 404, the fundamental frequency of the drive current of the first motor is obtained, and the fundamental frequency of the drive current of the first motor may be obtained through simple calculation based on the real-time rotation speed of the first motor. Similarly, the first rotation speed range, the second rotation speed range, the expected rotation speed, the first preset rotation speed, and the second preset rotation speed in the foregoing steps may alternatively be calculated to obtain the corresponding first frequency range, second frequency range, expected frequency, first preset frequency, and second preset frequency. The other methods are all the same. Therefore, in the method for inhibiting vehicle vibration during self-heating of a battery proposed based on the frequency dimension, for a specific method for controlling the fundamental frequency (that is, equivalent to the fundamental frequency of the self-heating in the method of step 101 to step 104) of the self-heating current, refer to the method of the foregoing step 101 to step 104. No further details are provided.

To sum up, in the method for inhibiting vehicle vibration during self-heating of a battery provided in the present disclosure, the real-time rotation speed of the first motor or the fundamental frequency of the drive current are first obtained, and then the change in the fundamental frequency of the self-heating is controlled based on the real-time rotation speed or the fundamental frequency of the drive current, to cause the real-time rotation speed of the second motor or the fundamental frequency of the drive current and the fundamental frequency of the self-heating to always fail to meet a numerical relationship. In this case, the jitters of the second motor can be eliminated, to prevent the entire vehicle from vibrating, thereby avoiding shortening a life span of the second motor while driving experience of passengers is improved.

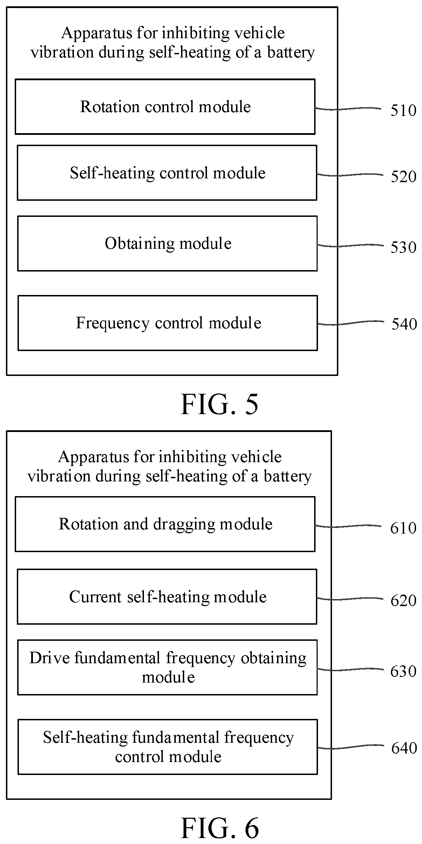

Based on the method for inhibiting vehicle vibration during self-heating of a battery, an embodiment of the present disclosure further proposes an apparatus for inhibiting vehicle vibration during self-heating of a battery. FIG. 5 is a block diagram of an apparatus for inhibiting vehicle vibration during self-heating of a battery according to an embodiment of the present disclosure. The apparatus is applied to a vehicle including a power battery pack, a first motor, and a second motor, and the apparatus includes:
a rotation control module 510, configured to control the power battery pack to output a drive current to the first motor to drive the first motor to rotate, where the first motor drags, when rotating, the second motor to rotate;
a self-heating control module 520, configured to control the power battery pack to output a self-heating current to the second motor to self-heat a power battery;
an obtaining module 530, configured to obtain a real-time rotation speed of the first motor; and
a frequency control module 540, configured to control a fundamental frequency of the self-heating based on the real-time rotation speed, to stagger the fundamental frequency and the real-time rotation speed.

In some embodiments, the frequency control module 540 includes:
a first control unit, configured to: when the real-time rotation speed falls within a first rotation speed range, control the fundamental frequency to be a first frequency; and
a second control unit, configured to: when the real-time rotation speed falls within a second rotation speed range, control the fundamental frequency to be a second frequency, where any rotation speed in the second rotation speed range is greater than any rotation speed in the first rotation speed range, and the second frequency is less than the first frequency.

In some embodiments, the frequency control module 540 includes:
a condition control frequency unit, configured to control the fundamental frequency based on the real-time rotation speed and a real-time condition, to stagger the fundamental frequency and the real-time rotation speed, where the real-time condition includes: the acceleration condition or the deceleration condition.

In some embodiments, the condition control frequency unit includes:
an expected rotation speed subunit, configured to determine an expected rotation speed based on a pedaling degree of an acceleration pedal under the acceleration condition or a pedaling degree of a deceleration pedal under the deceleration condition, where the expected rotation speed indicates a rotation speed of a motor corresponding to a vehicle speed that a driver expects to achieve; and
a condition control subunit, configured to control a self-heating current value and the fundamental frequency based on a value relationship between the expected rotation speed and multiple preset rotation speeds, and a value relationship between the real-time rotation speed and the multiple preset rotation speeds, in combination with the real-time condition.

In some embodiments, the multiple preset rotation speeds include: a first preset rotation speed and a second preset rotation speed; and
the condition control subunit is specifically configured to:
if the expected rotation speed is not greater than the second preset rotation speed, in a process in which the real-time rotation speed increases to the expected rotation speed under the acceleration condition, control the self-heating current value to be a first current value, and control the fundamental frequency to be the first frequency; or
if the expected rotation speed is greater than the second preset rotation speed, in a process in which the real-time rotation speed increases to a rotation speed less than the first preset rotation speed under the acceleration condition, control the self-heating current value to be a first current value, and control the fundamental frequency to be the first frequency; and
in a process in which the real-time rotation speed increases from the first preset rotation speed to the expected rotation speed, control the self-heating current value to decrease from the first current value to a second current value, and control the fundamental frequency to decrease from the first frequency to the second frequency, where the second current value is close to 0 or equal to 0.

In some embodiments, the condition control subunit is further specifically configured to:
determine whether a stable signal is received, where the stable signal indicates that the second motor does not generate a torque pulse ripple that oscillates back and forth; and
when the stable signal is received, control the self-heating current value to increase from the second current value to the first current value, and maintain the fundamental frequency to be the second frequency; or
when the stable signal is not received, maintain the self-heating current value to be the second current value, maintain the fundamental frequency to be the second frequency, and after the stable signal is received, control the self-heating current value to increase from the second current value to the first current value, and maintain the fundamental frequency to be the second frequency.

In some embodiments, the multiple preset rotation speeds include: the first preset rotation speed and the second preset rotation speed; and
the condition control subunit is further specifically configured to:
if the expected rotation speed is greater than the second preset rotation speed, in a process in which the real-time rotation speed decreases to the expected rotation speed under the deceleration condition, control the self-heating current value to be the first current value, and control the fundamental frequency to be the second frequency; or
if the expected rotation speed is not greater than the second preset rotation speed, after the real-time rotation speed is less than the second preset rotation speed under the deceleration condition, control the self-heating current value to decrease from the first current value to the second current value, and control the fundamental frequency to increase from the second frequency to the first frequency, where the second current value is close to 0 or equal to 0.

In some embodiments, the condition control subunit is further specifically configured to:
determine whether the stable signal is received, where the stable signal indicates that the second motor does not generate the torque pulse ripple that oscillates back and forth; and
when the stable signal is received, control the self-heating current value to increase from the second current value to the first current value, and maintain the fundamental frequency to be the first frequency; or
when the stable signal is not received, maintain the self-heating current value to be the second current value, maintain the fundamental frequency to be the first frequency, and after the stable signal is received, control the self-heating current value to increase from the second current value to the first current value, and maintain the fundamental frequency to be the first frequency.

Corresponding to the method of step 401 to step 404, an embodiment of the present disclosure further provides another apparatus for inhibiting vehicle vibration during self-heating of a battery. FIG. 6 is a block diagram of another apparatus for inhibiting vehicle vibration during self-heating of a battery according to an embodiment of the present disclosure. The apparatus is applied to a vehicle including a power battery pack, a first motor, and a second motor, and the apparatus includes:
a rotation and dragging module 610, configured to control the power battery pack to output a drive current to the first motor to drive the first motor to rotate, where the first motor drags, when rotating, the second motor to rotate;
a current self-heating module 620, configured to control the power battery pack to output a self-heating current to the second motor to self-heat a power battery;
a drive fundamental frequency obtaining module 630, configured to obtain a fundamental frequency of the drive current of the first motor; and
a self-heating fundamental frequency control module 640, configured to control a fundamental frequency of the self-heating current based on the fundamental frequency of the drive current, to stagger the fundamental frequency of the self-heating current and the fundamental frequency of the drive current.

In some embodiments, the self-heating fundamental frequency control module 640 includes:
a first unit, configured to: when the fundamental frequency of the drive current falls within a first frequency range, control the fundamental frequency of the self-heating current to be a first frequency; and
a second unit, configured to: when the fundamental frequency of the drive current falls within a second frequency range, control the fundamental frequency of the self-heating current to be a second frequency, where any frequency in the second frequency range is greater than any frequency in the first frequency range, and the second frequency is less than the first frequency.

In some embodiments, the self-heating fundamental frequency control module 640 includes:
a frequency staggering control unit, configured to control the fundamental frequency of the self-heating current based on the fundamental frequency of the drive current and a real-time condition, to stagger the fundamental frequency of the self-heating current and the fundamental frequency of the drive current, where the real-time condition includes: the acceleration condition or the deceleration condition.

In some embodiments, the frequency staggering control unit includes:
a condition and expected rotation speed subunit, configured to determine an expected rotation speed based on a pedaling degree of an acceleration pedal under the acceleration condition or a pedaling degree of a deceleration pedal under the deceleration condition, where the expected rotation speed indicates a rotation speed of a motor corresponding to a vehicle speed that a driver expects to achieve;
an expected frequency determining subunit, configured to determine, based on the expected rotation speed, an expected frequency corresponding to the expected rotation speed; and
a frequency staggering control subunit, configured to control a self-heating current value and the fundamental frequency of the self-heating current based on a value relationship between the expected frequency and a plurality of preset frequencies, and a value relationship between the fundamental frequency of the drive current and the plurality of preset frequencies, in combination with the real-time condition.

In some embodiments, the plurality of preset frequencies include: a first preset frequency and a second preset frequency; and
the frequency staggering control subunit is specifically configured to:
if the expected frequency is not greater than the second preset frequency, in a process in which the fundamental frequency of the drive current increases to the expected frequency under the acceleration condition, control the self-heating current value to be a first current value, and control the fundamental frequency of the self-heating current to be the first frequency; or
if the expected frequency is greater than the second preset frequency, in a process in which the fundamental frequency of the drive current increases to a frequency less than the first preset frequency under the acceleration condition, control the self-heating current value to be a first current value, and control the fundamental frequency of the self-heating current to be the first frequency; and
in a process in which the fundamental frequency of the drive current increases from the first preset frequency to the expected frequency, control the self-heating current value to decrease from the first current value to a second current value, and control the fundamental frequency of the self-heating current to decrease from the first frequency to the second frequency, where the second current value is close to 0 or equal to 0.

In some embodiments, the frequency staggering control subunit is further specifically configured to:
determine whether a stable signal is received, where the stable signal indicates that the second motor does not generate a torque pulse ripple that oscillates back and forth; and
when the stable signal is received, control the self-heating current value to increase from the second current value to the first current value, and maintain the fundamental frequency of the self-heating current to be the second frequency; or
when the stable signal is not received, maintain the self-heating current value to be the second current value, maintain the fundamental frequency of the self-heating current to be the second frequency, and after the stable signal is received, control the self-heating current value to increase from the second current value to the first current value, and maintain the fundamental frequency of the self-heating current to be the second frequency.

In some embodiments, the plurality of preset frequencies include: a first preset frequency and a second preset frequency; and
the frequency staggering control subunit is further specifically configured to:
if the expected frequency is greater than the second preset frequency, in a process in which the fundamental frequency of the drive current decreases to the expected frequency under the deceleration condition, control the self-heating current value to be the first current value, and control the fundamental frequency of the self-heating current to be the second frequency; or
if the expected frequency is not greater than the second preset frequency, after the fundamental frequency of the drive current is less than the second preset frequency under the deceleration condition, control the self-heating current value to decrease from the first current value to the second current value, and control the fundamental frequency of the self-heating current to increase from the second frequency to the first frequency, where the second current value is close to 0 or equal to 0.

In some embodiments, the frequency staggering control subunit is further specifically configured to:
determine whether the stable signal is received, where the stable signal indicates that the second motor does not generate the torque pulse ripple that oscillates back and forth; and
when the stable signal is received, control the self-heating current value to increase from the second current value to the first current value, and maintain the fundamental frequency of the self-heating current to be the first frequency; or
when the stable signal is not received, maintain the self-heating current value to be the second current value, maintain the fundamental frequency of the self-heating current to be the first frequency, and after the stable signal is received, control the self-heating current value to increase from the second current value to the first current value, and maintain the fundamental frequency of the self-heating current to be the first frequency.

Based on the foregoing method for inhibiting vehicle vibration during self-heating of a battery, an embodiment of the present disclosure further proposes a vehicle. The vehicle includes: a controller, configured to perform the method for inhibiting vibration of an entire vehicle during self-heating of a battery according to any one of step 101 to step 104; or configured to perform the method for inhibiting vehicle vibration during self-heating of a battery according to any one of step 401 to step 404.

It should further be noted that, the relational terms such as first and second in the specification are only used to distinguish one entity or operation from another, and do not necessarily require or imply that any actual relationship or sequence exists between these entities or operations. Moreover, the terms "include," "comprise," and any variation thereof are intended to cover a non-exclusive inclusion. Therefore, a process or a method that includes a series of elements not only includes such elements, but also includes other elements not specified expressly, or may include inherent elements of the process or method.

The embodiments of the present disclosure are described above with reference to the accompanying drawings, but the present disclosure is not limited to the foregoing specific implementations. The foregoing specific implementations are merely exemplary instead of restrictive. Under enlightenment of the present disclosure, a person of ordinary skills in the art may make many forms without departing from the aims of the present disclosure and the protection scope of claims, all of which fall within the protection of the present disclosure.

## Claims

1. A method for inhibiting vehicle vibration during self-heating of a battery, the method being applied to a vehicle comprising a power battery pack, a first motor, and a second motor, and the method comprising:
controlling the power battery pack to output a drive current to the first motor to drive the first motor to rotate, the first motor dragging, when rotating, the second motor to rotate;
controlling the power battery pack to output a self-heating current to the second motor to self-heat a power battery;
obtaining a real-time rotation speed of the first motor; and
controlling a fundamental frequency of the self-heating current according to the real-time rotation speed, to stagger the fundamental frequency and the real-time rotation speed.

2. The method according to claim 1, wherein controlling a fundamental frequency of the self-heating according to the real-time rotation speed, to stagger the fundamental frequency and the real-time rotation speed comprises:
when the real-time rotation speed falls within a first rotation speed range, controlling the fundamental frequency to be a first frequency; and
when the real-time rotation speed falls within a second rotation speed range, controlling the fundamental frequency to be a second frequency, wherein any rotation speed in the second rotation speed range is greater than any rotation speed in the first rotation speed range, and the second frequency is less than the first frequency.

3. The method according to claim 1 or 2, wherein controlling the fundamental frequency of the self-heating according to the real-time rotation speed, to stagger the fundamental frequency and the real-time rotation speed comprises:
controlling the fundamental frequency according to the real-time rotation speed and a real-time condition, to stagger the fundamental frequency and the real-time rotation speed, wherein the real-time condition comprises: an acceleration condition or a deceleration condition.

4. The method according to claim 3, wherein controlling the fundamental frequency according to the real-time rotation speed and the real-time condition, to stagger the fundamental frequency and the real-time rotation speed comprises:
determining an expected rotation speed according to a pedaling degree of an acceleration pedal under the acceleration condition or a pedaling degree of a deceleration pedal under the deceleration condition, wherein the expected rotation speed indicates a rotation speed of a motor corresponding to a vehicle speed that a driver expects to achieve; and
controlling a self-heating current value and the fundamental frequency according to a value relationship between the expected rotation speed and a plurality of preset rotation speeds, and a value relationship between the real-time rotation speed and the plurality of preset rotation speeds, in combination with the real-time condition.

5. The method according to claim 4, wherein the plurality of preset rotation speeds comprise: a first preset rotation speed and a second preset rotation speed; and
controlling the self-heating current value and the fundamental frequency according to the value relationship between the expected rotation speed and the plurality of preset rotation speeds, and the value relationship between the real-time rotation speed and the plurality of preset rotation speeds, in combination with the real-time condition comprises:
if the expected rotation speed is not greater than the second preset rotation speed, in a process in which the real-time rotation speed increases to the expected rotation speed under the acceleration condition, controlling the self-heating current value to be a first current value, and controlling the fundamental frequency to be the first frequency; or
if the expected rotation speed is greater than the second preset rotation speed, in a process in which the real-time rotation speed increases to a rotation speed less than the first preset rotation speed under the acceleration condition, controlling the self-heating current value to be a first current value, and controlling the fundamental frequency to be the first frequency; and
in a process in which the real-time rotation speed increases from the first preset rotation speed to the expected rotation speed, controlling the self-heating current value to decrease from the first current value to a second current value, and controlling the fundamental frequency to decrease from the first frequency to the second frequency, wherein the second current value is close to 0 or equal to 0.

6. The method according to claim 5, after controlling the self-heating current value to decrease from the first current value to the second current value, and controlling the fundamental frequency to decrease from the first frequency to the second frequency, further comprising:
determining whether a stable signal is received, the stable signal indicating that the second motor does not generate a torque pulse ripple that oscillates back and forth; and
when the stable signal is received, controlling the self-heating current value to increase from the second current value to the first current value, and maintaining the fundamental frequency to be the second frequency; or
when the stable signal is not received, maintaining the self-heating current value to be the second current value, maintaining the fundamental frequency to be the second frequency, and after the stable signal is received, controlling the self-heating current value to increase from the second current value to the first current value, and maintaining the fundamental frequency to be the second frequency.

7. The method according to any one of claims 4 to 6, wherein the plurality of preset rotation speeds comprise: the first preset rotation speed and the second preset rotation speed; and
controlling the self-heating current value and the fundamental frequency according to the value relationship between the expected rotation speed and the plurality of preset rotation speeds, and the value relationship between the real-time rotation speed and the plurality of preset rotation speeds, in combination with the real-time condition comprises:
if the expected rotation speed is greater than the second preset rotation speed, in a process in which the real-time rotation speed decreases to the expected rotation speed under the deceleration condition, controlling the self-heating current value to be the first current value, and controlling the fundamental frequency to be the second frequency; or
if the expected rotation speed is not greater than the second preset rotation speed, after the real-time rotation speed is less than the second preset rotation speed under the deceleration condition, controlling the self-heating current value to decrease from the first current value to the second current value, and controlling the fundamental frequency to increase from the second frequency to the first frequency, wherein the second current value is close to 0 or equal to 0.

8. The method according to claim 7, after controlling the self-heating current value to decrease from the first current value to the second current value, and controlling the fundamental frequency to increase from the second frequency to the first frequency, further comprising:
determining whether the stable signal is received, the stable signal indicating that the second motor does not generate the torque pulse ripple that oscillates back and forth; and
when the stable signal is received, controlling the self-heating current value to increase from the second current value to the first current value, and maintaining the fundamental frequency to be the first frequency; or
when the stable signal is not received, maintaining the self-heating current value to be the second current value, maintaining the fundamental frequency to be the first frequency, and after the stable signal is received, controlling the self-heating current value to increase from the second current value to the first current value, and maintaining the fundamental frequency to be the first frequency.

9. The method according to any one of claims 5 to 8, wherein a value of the first preset rotation speed and a value of the second preset rotation speed are determined by the first frequency, the second frequency, and a quantity of pole pairs of a motor.

10. The method according to any one of claims 1 to 9, wherein the first motor is a synchronous motor or an asynchronous motor, and the second motor is an asynchronous motor.

11. A method for inhibiting vehicle vibration during self-heating of a battery, the method being applied to a vehicle comprising a power battery pack, a first motor, and a second motor, and the method comprising:
controlling the power battery pack to output a drive current to the first motor to drive the first motor to rotate, the first motor dragging, when rotating, the second motor to rotate;
controlling the power battery pack to output a self-heating current to the second motor to self-heat a power battery;
obtaining a fundamental frequency of the drive current of the first motor; and
controlling a fundamental frequency of the self-heating current according to the fundamental frequency of the drive current, to stagger the fundamental frequency of the self-heating current and the fundamental frequency of the drive current.

12. The method according to claim 11, wherein controlling a fundamental frequency of the self-heating current according to the fundamental frequency of the drive current, to stagger the fundamental frequency of the self-heating current and the fundamental frequency of the drive current comprises:
when the fundamental frequency of the drive current falls within a first frequency range, controlling the fundamental frequency of the self-heating current to be a first frequency; and
when the fundamental frequency of the drive current falls within a second frequency range, controlling the fundamental frequency of the self-heating current to be a second frequency, wherein any frequency in the second frequency range is greater than any frequency in the first frequency range, and the second frequency is less than the first frequency.

13. The method according to claim 11 or 12, wherein controlling the fundamental frequency of the self-heating current according to the fundamental frequency of the drive current, to stagger the fundamental frequency of the self-heating current and the fundamental frequency of the drive current comprises:
controlling the fundamental frequency of the self-heating current according to the fundamental frequency of the drive current and a real-time condition, to stagger the fundamental frequency of the self-heating current and the fundamental frequency of the drive current, wherein the real-time condition comprises: an acceleration condition or a deceleration condition.

14. The method according to claim 13, wherein controlling the fundamental frequency of the self-heating current according to the fundamental frequency of the drive current and the real-time condition, to stagger the fundamental frequency of the self-heating current and the fundamental frequency of the drive current comprises:
determining an expected rotation speed according to a pedaling degree of an acceleration pedal under the acceleration condition or a pedaling degree of a deceleration pedal under the deceleration condition, wherein the expected rotation speed indicates a rotation speed of a motor corresponding to a vehicle speed that a driver expects to achieve;
determining, according to the expected rotation speed, an expected frequency corresponding to the expected rotation speed; and
controlling a self-heating current value and the fundamental frequency of the self-heating current according to a value relationship between the expected frequency and a plurality of preset frequencies, and a value relationship between the fundamental frequency of the drive current and the plurality of preset frequencies, in combination with the real-time condition.

15. The method according to claim 14, wherein the plurality of preset frequencies comprise: a first preset frequency and a second preset frequency; and
controlling the self-heating current value and the fundamental frequency of the self-heating current according to the value relationship between the expected frequency and the plurality of preset frequencies, and the value relationship between the fundamental frequency of the drive current and the plurality of preset frequencies, in combination with the real-time condition comprises:
if the expected frequency is not greater than the second preset frequency, in a process in which the fundamental frequency of the drive current increases to the expected frequency under the acceleration condition, controlling the self-heating current value to be a first current value, and controlling the fundamental frequency of the self-heating current to be the first frequency; or
if the expected frequency is greater than the second preset frequency, in a process in which the fundamental frequency of the drive current increases to a frequency less than the first preset frequency under the acceleration condition, controlling the self-heating current value to be a first current value, and controlling the fundamental frequency of the self-heating current to be the first frequency; and
in a process in which the fundamental frequency of the drive current increases from the first preset frequency to the expected frequency, controlling the self-heating current value to decrease from the first current value to a second current value, and controlling the fundamental frequency of the self-heating current to decrease from the first frequency to the second frequency, wherein the second current value is close to 0 or equal to 0.

16. The method according to claim 15, after controlling the self-heating current value to decrease from the first current value to the second current value, and controlling the fundamental frequency of the self-heating current to decrease from the first frequency to the second frequency, further comprising:
determining whether a stable signal is received, the stable signal indicating that the second motor does not generate a torque pulse ripple that oscillates back and forth; and
when the stable signal is received, controlling the self-heating current value to increase from the second current value to the first current value, and maintaining the fundamental frequency of the self-heating current to be the second frequency; or
when the stable signal is not received, maintaining the self-heating current value to be the second current value, maintaining the fundamental frequency of the self-heating current to be the second frequency, and after the stable signal is received, controlling the self-heating current value to increase from the second current value to the first current value, and maintaining the fundamental frequency of the self-heating current to be the second frequency.

17. The method according to any one of claims 14 to 16, wherein the plurality of preset frequencies comprise: the first preset frequency and the second preset frequency; and
controlling the self-heating current value and the fundamental frequency of the self-heating current according to the value relationship between the expected frequency and the plurality of preset frequencies, and the value relationship between the fundamental frequency of the drive current and the plurality of preset frequencies, in combination with the real-time condition comprises:
if the expected frequency is greater than the second preset frequency, in a process in which the fundamental frequency of the drive current decreases to the expected frequency under the deceleration condition, controlling the self-heating current value to be the first current value, and controlling the fundamental frequency of the self-heating current to be the second frequency; or
if the expected frequency is not greater than the second preset frequency, after the fundamental frequency of the drive current is less than the second preset frequency under the deceleration condition, controlling the self-heating current value to decrease from the first current value to the second current value, and controlling the fundamental frequency of the self-heating current to increase from the second frequency to the first frequency, wherein the second current value is close to 0 or equal to 0.

18. The method according to claim 17, after controlling the self-heating current value to decrease from the first current value to the second current value, and controlling the fundamental frequency of the self-heating current to increase from the second frequency to the first frequency, further comprising:
determining whether the stable signal is received, the stable signal indicating that the second motor does not generate the torque pulse ripple that oscillates back and forth; and
when the stable signal is received, controlling the self-heating current value to increase from the second current value to the first current value, and maintaining the fundamental frequency of the self-heating current to be the first frequency; or
when the stable signal is not received, maintaining the self-heating current value to be the second current value, maintaining the fundamental frequency of the self-heating current to be the first frequency, and after the stable signal is received, controlling the self-heating current value to increase from the second current value to the first current value, and maintaining the fundamental frequency of the self-heating current to be the first frequency.

19. An apparatus for inhibiting vehicle vibration during self-heating of a battery, the apparatus being applied to a vehicle comprising a power battery pack, a first motor, and a second motor, and the apparatus comprising:
a rotation control module, configured to control the power battery pack to output a drive current to the first motor to drive the first motor to rotate, the first motor dragging, when rotating, the second motor to rotate;
a self-heating control module, configured to control the power battery pack to output a self-heating current to the second motor to self-heat a power battery;
an obtaining module, configured to obtain a real-time rotation speed of the first motor; and
a frequency control module, configured to control a fundamental frequency of the self-heating according to the real-time rotation speed, to stagger the fundamental frequency and the real-time rotation speed.

20. An apparatus for inhibiting vehicle vibration during self-heating of a battery, the apparatus being applied to a vehicle comprising a power battery pack, a first motor, and a second motor, and the apparatus comprising:
a rotation and dragging module, configured to control the power battery pack to output a drive current to the first motor to drive the first motor to rotate, the first motor dragging, when rotating, the second motor to rotate;
a current self-heating module, configured to control the power battery pack to output a self-heating current to the second motor to self-heat a power battery;
a drive fundamental frequency obtaining module, configured to obtain a fundamental frequency of the drive current of the first motor; and
a self-heating fundamental frequency control module, configured to control a fundamental frequency of the self-heating current according to the fundamental frequency of the drive current, to stagger the fundamental frequency of the self-heating current and the fundamental frequency of the drive current.

21. A vehicle, the vehicle comprising: a controller, configured to perform the method for inhibiting vehicle vibration during self-heating of a battery according to any one of claims 1 to 9; or
configured to perform the method for inhibiting vehicle vibration during self-heating of a battery according to any one of claims 11 to 18.
